(19) Europäisches Patentamt
European Patent Office
Office européen des brevets

(11) **EP 4 206 922 A1**

(12) **EUROPEAN PATENT APPLICATION**

(43) Date of publication:
**05.07.2023 Bulletin 2023/27**

(21) Application number: **22191359.3**

(22) Date of filing: **22.08.2022**

(51) International Patent Classification (IPC):
**G06F 9/50** (2006.01)

(52) Cooperative Patent Classification (CPC):
**G06F 9/5027; G06F 9/5066;** G06F 9/5072

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.12.2021 CN 202111643872**

(71) Applicant: **BEIJING BAIDU NETCOM SCIENCE
AND
TECHNOLOGY CO. LTD.
100085 Beijing (CN)**

(72) Inventors:
• **LIU, Ji**
  **Beijing, 100085 (CN)**
• **WU, Zhihua**
  **Beijing, 100085 (CN)**
• **FENG, Danlei**
  **Beijing, 100085 (CN)**
• **ZHOU, Chendi**
  **Beijing, 100085 (CN)**
• **ZHANG, Minxu**
  **Beijing, 100085 (CN)**
• **WU, Xinxuan**
  **Beijing, 100085 (CN)**
• **YAO, Xuefeng**
  **Beijing, 100085 (CN)**
• **DOU, Dejing**
  **Beijing, 100085 (CN)**
• **YU, Dianhai**
  **Beijing, 100085 (CN)**
• **MA, Yanjun**
  **Beijing, 100085 (CN)**

(74) Representative: **dompatent von Kreisler Selting
Werner -
Partnerschaft von Patent- und Rechtsanwälten
mbB
Deichmannhaus am Dom
Bahnhofsvorplatz 1
50667 Köln (DE)**

(54) **RESOURCE ALLOCATION METHOD, RESOURCE ALLOCATION APPARATUS, DEVICE, MEDIUM AND COMPUTER PROGRAM PRODUCT**

(57) A resource allocation method, including: determining a neural network model to be allocated resources, and determining a set of devices capable of providing resources for the neural network model; determining, based on the set of devices and the neural network model, first set of evaluation points including first number of evaluation points, each of which corresponds to one resource allocation scheme and resource use cost corresponding to the resource allocation scheme; updating and iterating first set of evaluation points to obtain second set of evaluation points including second number of evaluation points, each of which corresponds to one resource allocation scheme and resource use cost corresponding to the resource allocation scheme, and second number being greater than first number; and selecting a resource allocation scheme with minimum resource use cost from the second set of evaluation points as a resource allocation scheme for allocating resources to the neural network model.

```
┌──────────────────────────────────────────────┐ ⌐S101
│ determining a neural network model to be       │
│ allocated resources, and determining a set of  │
│ devices capable of providing resources         │
│ for the neural network model                   │
└──────────────────────────────────────────────┘
                    ↓
┌──────────────────────────────────────────────┐ ⌐S102
│ determining, based on the set of devices and   │
│ the neural network model, a first set of       │
│ evaluation points                              │
└──────────────────────────────────────────────┘
                    ↓
┌──────────────────────────────────────────────┐ ⌐S103
│ updating and iterating the first set of         │
│ evaluation points to obtain a second set of    │
│ evaluation points                              │
└──────────────────────────────────────────────┘
                    ↓
┌──────────────────────────────────────────────┐ ⌐S104
│ selecting a resource allocation scheme with a   │
│ minimum resource use cost from the second set   │
│ of evaluation points as the resource allocation │
│ scheme for allocating resources to the neural   │
│ network model                                  │
└──────────────────────────────────────────────┘
```

**FIG. 1**

**Description**

TECHNICAL FIELD

The present disclosure relates to the field of computers, and more particularly, to the technical field of distributed operations.

BACKGROUND

Deep neural networks have achieved significant success in various fields, such as computer vision, natural language processing and advertising systems etc. In order to improve accuracy of deep learning models, large models with a large number of layers, neurons and parameters usually use a large amount of data for training. With the gradual growth of data scale and model scale of the deep learning models, network model training may spend a lot of time on a single device, which can't meet the needs of business, and distributed training has become the basis of training the deep learning model.

SUMMARY

The present disclosure provides a resource allocation method, a resource allocation apparatus, a device, a medium and a computer program product.

According to an aspect of the present disclosure, there is provided A resource allocation method, comprising: determining a neural network model to which resources are to be allocated, and determining a set of devices capable of providing resources for the neural network model; determining a first set of evaluation points based on the set of devices and the neural network model, wherein the first set of evaluation points includes a first number of evaluation points, and each evaluation point corresponds to one resource allocation scheme as well as a resource use cost corresponding to the resource allocation scheme; updating and iterating the first set of evaluation points to obtain a second set of evaluation points, wherein the second set of evaluation points includes a second number of evaluation points, and each evaluation point corresponds to one resource allocation scheme as well as a resource use cost corresponding to the resource allocation scheme, and the second number is greater than the first number; selecting a resource allocation scheme with the minimum resource use cost from the second set of evaluation points as a resource allocation scheme for allocating resources to the neural network model.

According to another aspect of the present disclosure, there is provided a resource allocation apparatus, comprising:

a determining module configured to determine a neural network model to which resources are to be allocated, and determine a set of devices capable of providing resources for the neural network model; and determine a first set of evaluation points based on the set of devices and the neural network model, wherein the first set of evaluation points includes a first number of evaluation points, and each evaluation point corresponds to one resource allocation scheme as well as a resource use cost corresponding to the resource allocation scheme; a processing module configured to update and iterate the first set of evaluation points to obtain a second set of evaluation points, wherein the second set of evaluation points includes a second number of evaluation points, and each evaluation point corresponds to one resource allocation scheme as well as a resource use cost corresponding to the resource allocation scheme, and the second number is greater than the first number; and select a resource allocation scheme with the minimum resource use cost from the second set of evaluation points as a resource allocation scheme for allocating resources to the neural network model.

According to another aspect of the present disclosure, there is provided an electronic device, comprising:

at least one processor; and
a memory communicatively connected with the at least one processor;
wherein the memory stores instructions executable by the at least one processor, the instructions are executed by the at least one processor to enable the at least one processor to perform the method involved in the above.

According to another aspect of the present disclosure, there is provided a non-transitory computer readable storage medium storing computer instructions, wherein the computer instructions are used to cause the computer to execute the method involved in the above.

According to another aspect of the present disclosure, there is provided a computer program product, comprising a computer program which, when executed by a processor, implements the method involved in the above.

It should be understood that the content described in this section is not intended to identify key or critical features of embodiments of the present disclosure, nor is it intended to limit the scope of the present disclosure. Other features of the present disclosure will become readily understood from the following description.

BRIEF DESCRIPTION OF THE DRAWINGS

The accompanying drawings are used to better understand the solutions of the present disclosure, and do not constitute a limitation to the present disclosure, in which:

FIG. 1 is a schematic flowchart of a resource allocation method according to some embodiments of the present disclosure;
FIG. 2 is a schematic flowchart of updating and iterating the first set of evaluation points to obtain the second set of evaluation points according to some embodiments of the present disclosure;
FIG. 3 is a schematic flowchart of determining the first set of evaluation points based on the set of devices and the neural network model according to some embodiments of the present disclosure;
FIG. 4 is a schematic flowchart of determining the resource use cost of the neural network model in a resource allocation scheme according to some embodiments of the present disclosure;
FIG. 5 is another schematic flowchart of determining the resource use cost of the neural network model in a resource allocation scheme according to some embodiments of the present disclosure;
FIG. 6 is a schematic diagram exemplarily showing stage division according to the present disclosure;
FIG. 7 is a block diagram of a resource allocation apparatus according to the present disclosure;
FIG. 8 shows a schematic block diagram of an exemplary electronic device that can be used to implement embodiments of the present disclosure.

DETAILED DESCRIPTION OF THE EMBODIMENTS

Exemplary embodiments of the present disclosure are described below with reference to the accompanying drawings, which include various details of the embodiments of the present disclosure so as to facilitate understanding, and they should be considered as exemplary only. Accordingly, those of ordinary skill in the art will recognize that various changes and modifications can be made to the embodiments described herein without departing from the scope and spirit of the present disclosure. Also, descriptions of commonly-known functions and constructions are omitted from the following description for clarity and conciseness.

The resource allocation method provided by the embodiments of the present disclosure can be applied to resource allocation scenarios for distributed operations. For example, it can be applied to scenarios where resources are allocated to different network layers of the neural network model through distributed operations.

The deep neural network has achieved significant success in various fields, such as computer vision, natural language processing and advertising system etc. In order to improve the accuracy of the deep learning model, the large model with a large number of layers, neurons and parameters usually use a large amount of data for training. With the gradual growth of data scale and model scale of the deep learning model, network model training may spend a lot of time on a single device, which cannot meet the needs of business, and distributed training has become the basis of training the deep learning model. However, for different network layers of the neural network model, how to allocate resources so that the data throughput of network training can be as large as possible and the device use cost can be minimized as much as possible is something we should consider.

In the related technologies, the resources are allocated to different network layers of the neural network model usually based on empirical values. For example, in the related technologies, the network layers of the neural network model are divided into a data-intensive type and a computational-intensive type based on experience. The data-intensive type represents the network layer type in which communication time consumption to communicate with other network layers is greater than computational time consumption for data processing, and the computational-intensive type represents the network layer type in which communication time consumption to communicate with other network layers is smaller than computational time consumption for data processing. Based on this, in the related technologies, the network layers of the data-intensive type (e.g., a embedding layer) are usually executed with the central processing unit (CPU), and the network layers of the computation-intensive type (i.e., the fully connected layer) is executed with the graphics processing unit (GPU). However, in the related technologies, the manner of allocating resources to different network layers based on empirical values cannot obtain an optimal resource allocation manner, and there are problems such as waste of device use resource and long training time.

In view of this, the embodiments of the present disclosure provide a resource allocation method, which can comprehensively consider the data throughput and the device use cost by evaluating the resource use cost corresponding to the resource allocation scheme. Specifically, a neural network model to which resources are to be allocated can be determined, and a set of devices capable of providing resources for the neural network model can be determined. Further, a first set of evaluation points can be determined, and a second set of evaluation points including the first set of evaluation points can be obtained by updating and iterating the first set of evaluation points. Based on this, the resource allocation scheme with the minimum resource use cost can be selected from the second set of evaluation points as the resource allocation scheme for allocating resources to the neural network model. Since the present disclosure can screen to obtain the resource allocation scheme with the minimum resource use cost, it can realize resource allocation to the neural network model with the largest possible data throughput and the smallest possible device use cost, so as to meet the resource allocation requirement for the training of the neural network model.

In the embodiments of the present disclosure, a set of evaluation points is used to characterize the data combination as a reference scheme. For example, one set evaluation points includes a resource allocation scheme and a resource use cost corresponding to the resource allocation scheme. Hereinafter, for the convenience of description in the present disclosure, the set of evaluation points determined for the first time is referred to as the first set of evaluation points, the set evaluation points obtained after updating and iterating the first set of evaluation points is referred to as the second set of evaluation points, the number of evaluation points included in the first set of evaluation points is called the first number, and the number of evaluation points included in the second set of evaluation points is called the second number.

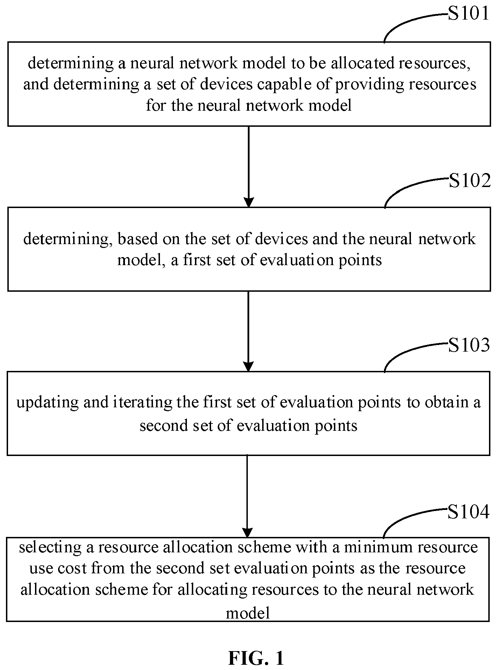

FIG. 1 is a schematic flowchart of a resource allocation method according to some embodiments of the present disclosure, as shown in FIG. 1, the following steps are included.

In step S101, a neural network model to be allocated resources is determined, and a set of devices capable of providing resources for the neural network model is determined.

In the embodiments of the present disclosure, the set of devices includes available devices that currently have idle resources, for example, the set of devices can include devices such as a CPU, a GPU, and memory.

In step S102, a first set of evaluation points is determined based on the set of devices and the neural network model.

In step S103, the first set of evaluation points is updated and iterated to obtain a second set of evaluation points.

Exemplarily, the second set of evaluation points includes a second number of evaluation points. Furthermore, since the second set of evaluation points is obtained by updating and iterating the first set of evaluation points and the second set of evaluation points includes the first set of evaluation points, it can be understood that the first number is smaller than the second number.

In step S104, a resource allocation scheme with the minimum resource use cost is selected from the second set of evaluation points as a resource allocation scheme for allocating resources to the neural network model.

Through the resource allocation method provided by the embodiments of the present disclosure, the present disclosure can screen to obtain the resource allocation scheme with the minimum resource use cost, thereby resources are allocated to the neural network model by using the resource allocation scheme with the minimum resource use cost, so as to meet the resource allocation requirement of the neural network model.

Generally, the cardinal number of devices in the set of devices is large, and for respective devices in the set of devices, if the resource use cost corresponding to each resource allocation scheme is determined in sequence by means of violent search, there are problems of high computational complexity and long screening time.

In the embodiments of the present disclosure, a probabilistic surrogate model of the objective function applied to the Bayesian algorithm model can be updated through the first set of evaluation points. Further, the set of observation points can be randomly generated through the updated probabilistic surrogate model, and thereby the first set of evaluation points is updated and iterated to obtain the second set of evaluation points. Based on this, the resource allocation scheme with the minimum resource use cost can be determined in the second set of evaluation points. It can be understood that the set of observation points includes a plurality of observation points, and each observation point corresponds to one resource allocation scheme. For the convenience of description, the number of observation points included in the set of observation points is referred to as the third number.

For example, in the case where the first set of evaluation points is determined, the first set of evaluation points can be updated and iterated in the following way to obtain the second set of evaluation points.

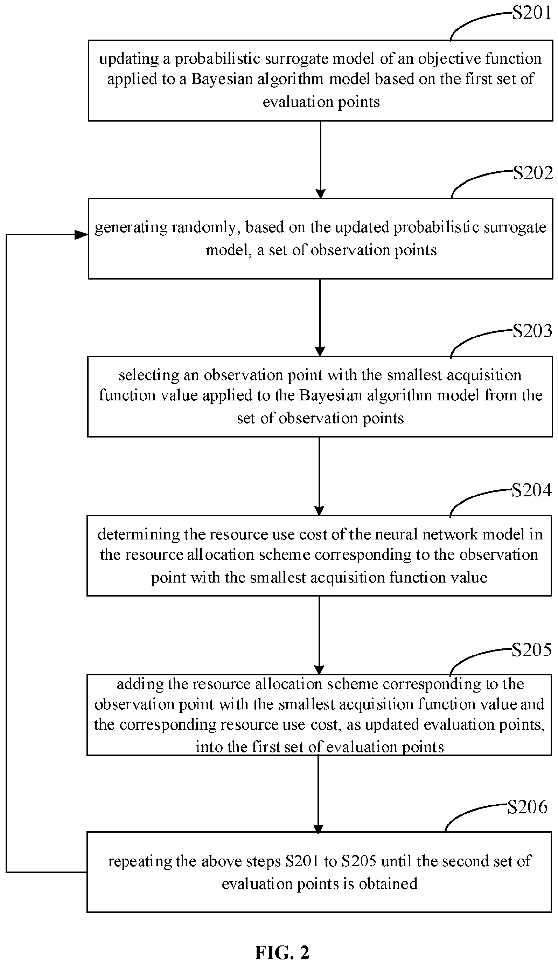

FIG. 2 is a schematic flowchart of updating and iterating the first set of evaluation points to obtain the second set of evaluation points according to some embodiments of the present disclosure, as shown in FIG. 2, the following steps S201 to S206 are included.

In step S201, a probabilistic surrogate model of an objective function applied to a Bayesian algorithm model is updated based on the first set of evaluation points.

Exemplarily, the objective function applied to the Bayesian algorithm model is a Gaussian process (GP) function.

In step S202, a set of observation points is randomly generated based on the updated probabilistic surrogate model.

In step S203, an observation point with the smallest acquisition function value applied to the Bayesian algorithm model is selected from the set of observation points.

In the embodiments of the present disclosure, the acquisition function applied to the Bayesian algorithm model is an exponential integral (EI) function.

Exemplarily, the resource allocation scheme (exemplarily represented by $sp_i^*$) corresponding to the observation point with the smallest acquisition function value applied to the Bayesian algorithm model can be selected from

$$sp_i^* = \mathrm{argmin}_{sp \subset D'} \mathrm{EI}\,(sp, D_n)$$

the set of observation points through the EI function by way of . Herein, $D_n$ represents the first set of evaluation points, n represents the first number, sp is the resource allocation scheme corresponding to the respective evaluation point in the first set of evaluation points, $\mathrm{argmin}_{sp \subset D'}$ represents a minimum angle value with respect to the set of observation points D', which corresponds to the EI function, can be understood as the function minimum value of the EI function.

In step S204, the resource use cost of the neural network model in the resource allocation scheme corresponding to the observation point with the smallest acquisition function value is determined.

Exemplarily, the resource allocation scheme corresponding to the observation point with the smallest acquisition function value can be substituted into a pre-built cost model by way of $c_i = \mathrm{Cost}(sp_i^*)$, so as to determine the resource use cost (exemplarily represented by $c_i$) of the neural network model in the resource allocation scheme corresponding to the observation point with the smallest acquisition function value. Herein, $\mathrm{Cost}(sp_i^*)$ is the result value of the cost model matching the resource allocation scheme $sp_i^*$, that is, the resource use cost corresponding to the resource allocation scheme $sp_i^*$.

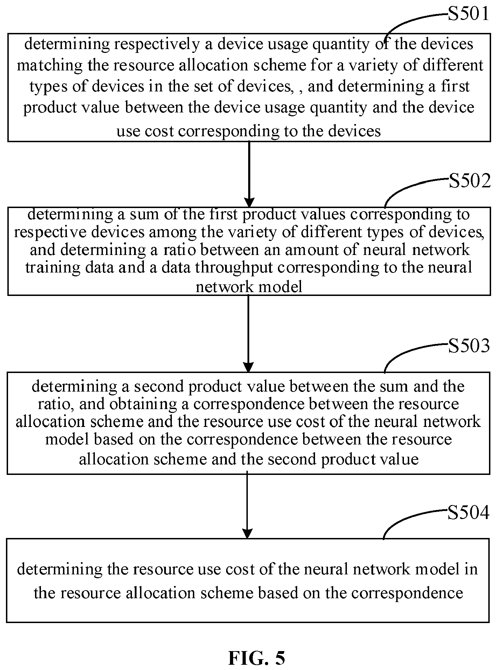

Herein, the cost model is used to estimate the resource use cost corresponding to the different resource allocation scheme, the model input includes the resource allocation scheme, and the model output is the resource use cost of the corresponding resource allocation scheme. The build manner of the cost model will be described in detail in the subsequent embodiments, as for the related content, the embodiments involved in FIG. 5 can be referenced.

In step S205, the resource allocation scheme corresponding to the observation point with the smallest acquisition function value as well as the corresponding resource use cost is taken as an updated evaluation point and added into the first set of evaluation points.

Exemplarily, the set of evaluation points (exemplarily represented by $D_{(n+1)}$) after updating the evaluation points can be obtained by way of $D_n \cup (c_i, sp_i^*) \rightarrow D_{n+1}$. Herein, $D_n$ represents the first set of evaluation points, $(c_i, sp_i^*)$ represents the updated evaluation point, and $D_n \cup (c_i, sp_i^*)$ represents the union set between the two.

In step S206, the above steps S201 to S205 are repeated until the second set of evaluation points is obtained.

For example, the number of evaluation points in the set of evaluation points is increased by 1 (for example, from $D_n$ to $D_{(n+1)}$) every time the above steps S201 to S205 are executed. By repeatedly performing the above steps S201 to S205 for many times, the evaluation point set can be updated from the first set of evaluation points including the first number of evaluation points to the second set of evaluation points including the second number of evaluation points.

According to the resource allocation method provided by the embodiments of the present disclosure, the set of observation points is used to assist in determining the evaluation point corresponding to the minimum resource use cost, and the search range of the next search can be reduced each time the evaluation point set is updated. This method can quickly traverse the entire search space of the evaluation points, and has the advantage of efficient and quick search compared with conventional ways of screening the resource allocation schemes such as violent search.

Exemplarily, the first number of evaluation points can be artificially set or can be randomly generated. Random generation can adopt any random algorithm in the conventional technical measures, and no repetition is made here in the present disclosure. The process of obtaining the first set of evaluation points is described below in a random generation manner.

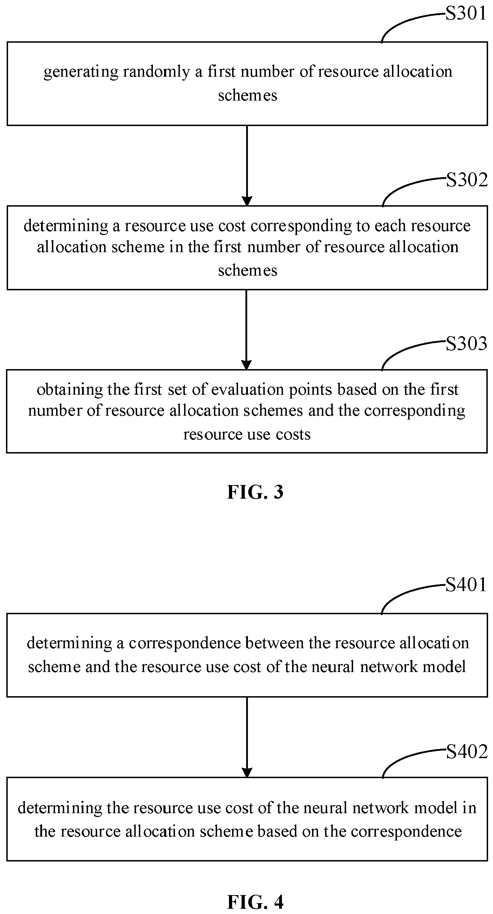

FIG. 3 is a schematic flowchart of determining the first set of evaluation points based on the set of devices and the neural network model according to some embodiments of the present disclosure, as shown in FIG. 3, the following steps are included.

In step S301, a first number of resource allocation schemes is randomly generated.

In the embodiments of the present disclosure, the neural network model includes different network layers. For the resource allocation schemes, each resource allocation scheme includes the allocated device(s) as well as network layers in the neural network model to be executed by the device(s).

Exemplarily, the randomly generated first number is less than the total number of the resource allocation schemes. According to the resource allocation method provided by the embodiments of the disclosure, the first number can be adjusted according to the actual demand for the first set of evaluation points, and the present disclosure makes no limitation to the specific value of the first number.

In step S302, a resource use cost corresponding to each resource allocation scheme in the first number of resource allocation schemes is determined.

In step S303, the first set of evaluation points is obtained based on the first number of resource allocation schemes as well as the corresponding resource use costs.

The resource allocation method provided by the embodiments of the present disclosure determines the corresponding resource use costs by randomly generating the first number of resource allocation schemes, and obtains the first set of evaluation points through the resource allocation schemes as well as the corresponding resource use costs, so as to facilitate the subsequent screening for the resource allocation scheme with the minimum resource use cost.

Exemplarily, the resource use cost of the neural network model in the resource allocation scheme can be determined by the correspondence between the resource allocation scheme and the resource use cost of the neural network model.

FIG. 4 is a schematic flowchart of determining the resource use cost of the neural network model in a resource allocation scheme according to some embodiments of the present disclosure, as shown in FIG. 4, the following steps are included.

In step S401, a correspondence between the resource allocation scheme and the resource use cost of the neural network model is determined.

In step S402, the resource use cost of the neural network model in the resource allocation scheme is determined based on the correspondence.

The resource allocation method provided by the embodiments of the present disclosure can realize the determination of the resource use cost of the neural network model in the resource allocation scheme through the correspondence between the resource allocation scheme and the resource use cost of the neural network model.

In some embodiments, the correspondence between the resource allocation scheme and the resource use cost of the neural network model can be determined in the following way.

FIG. 5 is a schematic flowchart of determining the resource use cost of the neural network model in another resource allocation scheme according to some embodiments of the present disclosure, as shown in FIG. 5, steps S501 to S504 are included. Herein, S504 is similar to the step S402 in FIG. 4 in the embodiments of the present disclosure, and no more details are repeated.

In step S501, for a variety of different types of devices in the set of devices, a device usage quantity of the devices matching the resource allocation scheme is respectively determined, and a first product value between the device usage quantity and a device use cost corresponding to the devices is determined.

For example, for the resource allocation scheme including the device t, the device demand number kt for the device t can be determined through the resource allocation scheme, and the device use cost corresponding to the device t (exemplarily represented by $p_t$) can be obtained from the predefined device use cost. Further, the resource use cost in the resource allocation scheme for the device t can be determined by way of $p_t * k_t$, that is, the first product value.

In step S502, a sum of the first product values corresponding to respective devices among the variety of different types of devices is determined, and a ratio between an amount of neural network training data and a data throughput corresponding to the neural network model is determined.

For example, the sum of the first product values corresponding to respective devices among the variety of different types of devices can be determined by $\sum_{i=t}^{T} p_t * k_t$, where T represents the number of devices of different types, and i represents the device type matching the resource allocation scheme. In addition, the ratio between the amount of the neural network training data and the data throughput corresponding to the neural network model can be determined by $R * \dfrac{M}{\text{Throughput}}$, where for the amount of the neural network training data (exemplarily represented by R*M), R represents the number of rounds of neural network training, and M represents the amount of the neural network training data used in each round of training. In addition, the data throughput corresponding to the neural network model is represented by Throughput.

In step S503, a second product value between the sum and the ratio is determined, and a correspondence between the resource allocation scheme and the resource use cost of the neural network model is obtained based on the correspondence between the resource allocation scheme and the second product value.

According to the resource allocation method provided by the embodiments of the present disclosure, for the above mentioned way, the correspondence between the resource allocation scheme and the resource use cost of the neural network model can be obtained through the data throughput of the neural network and the device use cost of different types of devices.

Exemplarily, the second product value between the sum and the ratio can be determined by

$$R * \frac{M}{Throughput} * \sum_{i=t}^{T} p_t * k_t$$

. On this basis, the second product value is the resource use cost matching the resource allocation scheme, and the correspondence between the resource allocation scheme and the second product value is the correspondence between the resource allocation scheme and the resource use cost of the neural network model. To sum up, the correspondence between resource allocation scheme and the resource use cost of the neural

$$Cost = R * \frac{M}{Throughput} * \sum_{i=t}^{T} p_t * k_t$$

network model can be represented by                                     .

It can be understood herein that the correspondence between the above resource allocation scheme and the resource use cost of the neural network model is the cost model.

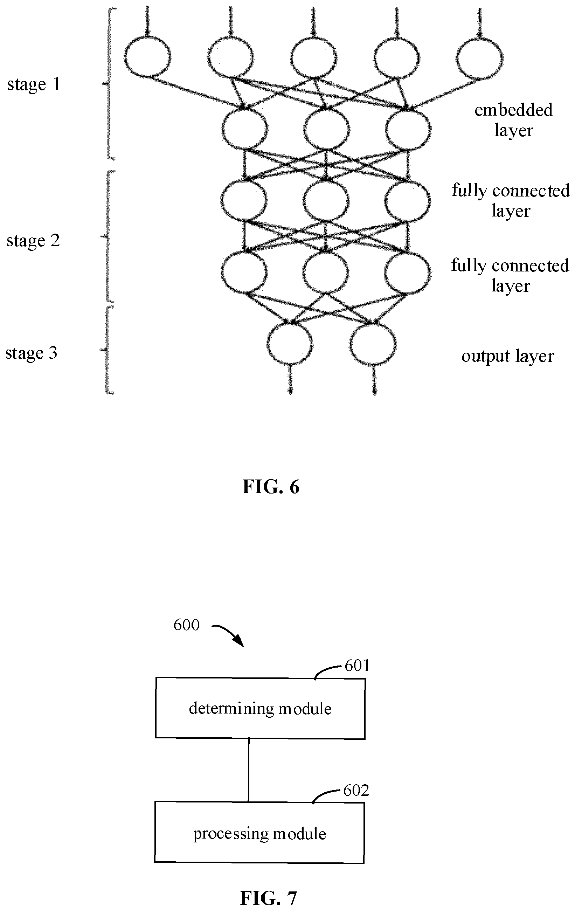

Exemplarily, the neural network model can be divided into different stages. Herein, each stage contains one or more network layers of the neural network model, and each stage is executed by the same type of devices. For example, as shown in FIG. 6, for the neural network model including an embedded layer, fully connected layers and an output layer, different network layers can be split, and the embedded layer can be divided into stage 1, the fully connected layer can be divided into stage 2 and the output layer can be divided into stage 3. Furthermore, one type of device resources can be used for resource allocation for each stage under the condition that the resource allocation scheme is determined.

In some embodiments, the data throughput (exemplarily represented by Throughput) corresponding to the neural network model can be determined as follows.

Exemplarily, the computational time consumption of each stage of the neural network model can be calculated by $$CT_i = \frac{OCT_i}{B_o} * (1 - \alpha_i + \frac{\alpha_i}{k_i})$$ (exemplarily, the computational time consumption can be understood as the time spent on calculation and processing of the neural network training data, and exemplarily represented by $CT_i$), and the communication time consumption of each stage of the neural network model is calculated by the way of

$$DT_i = \frac{ODT_i}{B_o} * (1 - \beta_i + \frac{\beta_i}{k_i})$$ (exemplarily, the communication time consumption can be understood as the time spent to communicate with other network layers, and is exemplarily represented by $DT_i$). Herein, $OCT_i$ represents the initial calculation time consumption, $ODT_i$ represents the initial communication time consumption, $k_i$ represents the number of devices used in the same stage, and $B_o$ represents the small batch used to measure the calculation time consumption and the communication time consumption. In addition, i is used to identify different stages, and $\alpha_i$ and $\beta_i$ represent constants of computation parallelization and data communication parallelization, and can be obtained by different computing resources and corresponding computing time.

In the embodiments of the present disclosure, the execution time for executing the training task in each stage can be understood as the cumulative value of the communication time consumption and the calculation time consumption in the above. Exemplarily, the execution time for executing the training task in each stage can be determined by $ET_i = \max \{CT_i, DT_i\}$.

Further, in the case where the execution time corresponding to each stage is determined, the data throughput corresponding to each stage can be obtained according to the batch size of the training data (exemplarily represented

$$Throughput_i = \frac{B}{ET_i}$$

by B). For example, the data throughput corresponding to each stage can be determined by                    . Here i represents the serial number of the stage, for example, for the stage division manner shown in FIG. 6, i can be stage 1, stage 2 or stage 3.

In the embodiments of the present disclosure, the training process of the neural network model is completed with multiple stages obtained by dividing different network layers, by a pipeline parallel method,. Thus, the data throughput of the neural network model is limited by the minimum throughput of each stage. In other words, the data throughput of

$$Throughput = \min_{i \in \{1,2,...,S\}} Throughput_i$$

the neural network model can be represented by                                                      , where i represents the serial number of stages, and S represents the total number of the stages. Based on this, the data throughput of the neural network model can be obtained.

For example, according to the resource allocation scheme for the neural network model, one network layer can only be allocated to one type of devices, and the network layers allocated to the same type of devices constitute one stage.

In the embodiments of the present disclosure, the data throughput corresponding to the neural network model satisfies the following constraints.

Constraint 1: the data throughput of the neural network model is smaller than the minimum data throughput corresponding to respective stages.

Constraint 2: the data throughputs corresponding to respective stages are equal.

Exemplarily, the constraint 1 can be represented by $\text{Throughput(sp)} > \text{Throughput}_{limit}$ , and the constraint 2 can be represented by $\text{Throughput}_i = \text{Throughput}_1, \forall i \in \{2,3, ..., S\}$. Herein, $\text{Throughput}_{limit}$ represents the minimum throughout limit, i represents the serial number of stages, and S represents the total number of the stages.

In some embodiments, in order to make all types of devices correspond to the minimum resource use cost while meeting the constraint of data throughput, the final constraint for data throughput of the neural network model can be determined through the above constraint 1 and constraint 2.

Exemplarily, for the constraint 2, substitution and updating can be performed on the constraint 2 by calculating the computational time consumption of each stage, calculating the communication time consumption of each stage as well as calculating the data throughput of each stage, to obtain the correspondence between the data throughput of each stage (exemplarily represented by $k_i$) and the data throughput of stage 1 (exemplarily represented by ki). For example, the correspondence between $k_i$ and $k_1$ can be represented as $k_i = \dfrac{\alpha_i}{\dfrac{OCT_1}{OCT_i} * \left(1 - \alpha_1 + \dfrac{\alpha_1}{k_1}\right) - (1 - \alpha_i)}$ , where

$\alpha_i$ represents the parallelization computation constant corresponding to the stage i, $\alpha_1$ represents the parallelization computation constant corresponding to stage 1, $OCT_1$ represents the initial computational time consumption corresponding to stage 1, and $OCT_i$ represents the initial computational time consumption corresponding to the stage i.

In the embodiments of the present disclosure, the correspondence between $k_i$ and $k_1$ is substituted into the constraint 1, and then the final constraint of the neural network model for data throughput can be obtained.

Exemplarily, in the case where the constraint 1 is $\text{Throughput(sp)} > \text{Throughput}_{limit}$ and the correspondence

between $k_i$ and $k_1$ is $k_i = \dfrac{\alpha_i}{\dfrac{OCT_1}{OCT_i} * \left(1 - \alpha_1 + \dfrac{\alpha_1}{k_1}\right) - (1 - \alpha_i)}$ , the final constraint can be represented by $k_1 >$

$\min \left\{ \dfrac{\alpha_1 * OCT_1}{\text{Throughput}_{limit} * B_o - (1 - \alpha_1) * OCT_1}, \dfrac{\beta_1 * OCT_1}{\text{Throughput}_{limit} * B_o - (1 - \beta_1) * OCT_1} \right\}$ , where $OCT_1$ represents the initial computation time consumption corresponding to stage 1, $B_o$ represents the small batch for measuring the computational time consumption and the data communication time consumption, $\alpha_1$ represents the computation parallelization constant corresponding to stage 1, $\beta_1$ represents the communication parallelization constant corresponding to stage 1, and $\text{Throughput}_{limit}$ represents the data throughput limit of the neural network model. Herein, because the final constraint is limited by the equal data throughput of the respective stages, the constraint corresponding to the data throughput (exemplarily represented by $k_1$) of stage 1 is the final constraint corresponding to the data throughput of the neural network model. Further, the maximum value of the data throughput corresponding to the neural network model can be determined in the case where the final constraint is obtained by the maximum calculation method such as the Newton method. Based on this, the maximum value of the data throughput corresponding to the neural network model is introduced into the search process of evaluation points, which can further reduce the search range of evaluation points and further optimize the search of evaluation points.

Based on the similar concept, the embodiments of the present disclosure further provide a resource allocation apparatus.

It can be understood that, in order to realize the above functions, the resource allocation apparatus provided by the embodiments of the present disclosure includes corresponding hardware structures and/or software modules for executing the respective functions. In combination with the modules and algorithm steps of the respective examples disclosed in the embodiments of the present disclosure, the embodiments of the present disclosure can be implemented in the form of hardware or a combination of hardware and computer software. As for whether a certain function is performed by hardware or in the manner of computer software driving hardware, it depends on the specific application and design constraint of the technical solutions. Those skilled in the art can use different methods to realize the described functions for each specific application, but this realization should not be considered beyond the scope of the technical solutions of the embodiments of the present disclosure.

FIG. 7 is a block diagram of a resource allocation apparatus according to the present disclosure. With reference to FIG. 7, the apparatus 600 comprises a determining module 601 and a processing module 602.

The determining module 601 is configured to determine a neural network model to which resources are to be allocated, and determine a set of devices capable of providing resources for the neural network model; and determine a first set of evaluation points based on the set of devices and the neural network model, herein the first set of evaluation points includes a first number of evaluation points, and each evaluation point corresponds to one resource allocation scheme as well as a resource use cost corresponding to the resource allocation scheme. The processing module 602 is configured to update and iterate the first set of evaluation points to obtain a second set of evaluation points, the second set of evaluation points includes a second number of evaluation points, and each evaluation point corresponds to one resource allocation scheme as well as a resource use cost corresponding to the resource allocation scheme, and the second number is greater than the first number; and select a resource allocation scheme with the minimum resource use cost from the second set of evaluation points as a resource allocation scheme for allocating resources to the neural network model.

In some embodiments, the processing module 602 is configured to update and iterate the first set of evaluation points to obtain a second set of evaluation points in the following way: updating a probabilistic surrogate model of an objective function applied to a Bayesian algorithm model based on the first set of evaluation points; randomly generating an set of observation points based on an updated probabilistic surrogate model, the set of observation points includes a third number of observation points, and each observation point corresponds to one resource allocation scheme; selecting an observation point with the smallest acquisition function value applied to the Bayesian algorithm model from the set of observation points; determining the resource use cost of the neural network model in the resource allocation scheme corresponding to the observation point with the smallest acquisition function value; taking the resource allocation scheme corresponding to the observation point with the smallest acquisition function value as well as the corresponding resource use cost as an updated evaluation point and adding into the first set of evaluation points; and repeating the above process until the second set of evaluation points is obtained.

In some embodiments, the determining module 601 is configured to determine the first set of evaluation points based on the set of devices and the neural network model in the following way: randomly generating a first number of resource allocation schemes, herein, each resource allocation scheme includes the allocated devices as well as the network layers in the neural network model to be executed by the device; determining the resource use cost corresponding to each resource allocation scheme in the first number of resource allocation schemes; and obtaining the first set of evaluation points based on the first number of resource allocation schemes as well as the corresponding resource use cost.

In some embodiments, the objective function applied to the Bayesian algorithm model is a Gaussian process function.

In some embodiments, the acquisition function applied to the Bayesian algorithm model is an exponential integral EI function.

In some embodiments, the determining module 601 is configured to determine the resource usage cost of the neural network model in the resource allocation scheme in the following way: determining a correspondence between the resource allocation scheme and the resource use cost of the neural network model; and determining the resource use cost of the neural network model in the resource allocation scheme based on the correspondence.

In some embodiments, the determining module 601 is configured to determine the correspondence between the resource allocation scheme and the resource use cost of the neural network model in the following ways: for a variety of different correspondences of devices in the set of devices, determining respectively the device usage quantity of the devices matching the resource allocation scheme, and determining a first product value between the device usage quantity and the device use cost corresponding to the devices; determining a sum of the first product values corresponding to respective devices among the variety of different correspondences of devices, and determining a ratio between an amount of neural network training data and a data throughput corresponding to the neural network model; and determining a second product value between the sum and the ratio, and obtaining a correspondence between the resource allocation scheme and the resource use cost of the neural network model based on the correspondence between the resource allocation scheme and the second product value.

In some embodiments, the neural network model is divided into different stages, each of the different stages contains one or more network layers of the neural network model, and each stage is executed by the same correspondence of devices. The data throughput corresponding to the neural network model satisfies the following constraints: the data throughput of the neural network model is smaller than the minimum data throughput corresponding to respective stages among the stages; and the data throughputs corresponding to respective stages among the stages are equal.

Regarding the apparatus in the above embodiments, the specific manners in which the respective modules perform operations have been described in detail in the embodiments regarding the method, and no more details are repeated herein.

In the technical solutions of the present disclosure, the acquisition, storage and application etc. of the user's personal information involved all comply with the provisions of relevant laws and regulations, and do not violate public order and good customs.

According to the embodiments of the present disclosure, the present disclosure further provides an electronic device, a readable storage medium, and a computer program product.

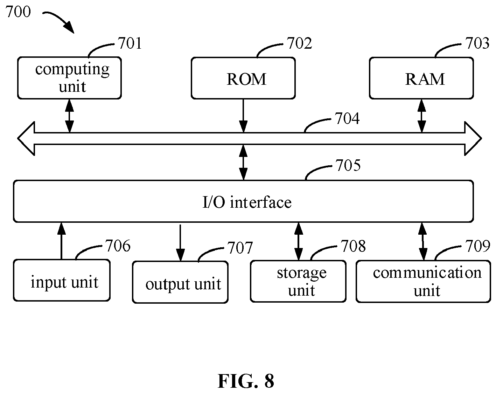

FIG. 8 shows a schematic block diagram of an example electronic device that can be used to implement embodiments of the present disclosure. The electronic device is intended to represent various forms of digital computers, such as laptop computers, desktop computers, workstations, personal digital assistants, servers, blade servers, mainframe computers, and other suitable computers. The electronic device can also represent various forms of mobile devices, such as personal digital assistants, cellular phones, smart phones, wearable devices and other similar computing devices. The components shown herein, their connections and relationships, and their functions are only examples, and are not intended to limit the implementations of the present disclosure described and/or claimed herein.

As shown in FIG. 8, the device 700 includes a computing unit 701, which can perform various appropriate actions and processes according to a computer program stored in a read only memory (ROM) 702 or a computer program loaded from a storage unit 708 into a random access memory (RAM)703. Various programs and data required for the operations of the device 700 can also be stored in the RAM 703. The computing unit 701, the ROM 702, and the RAM 703 are connected to each other through a bus 704. An input/output (I/O) interface 705 is also connected to the bus 704.

A number of components in the device 700 are connected to the I/O interface 705, including: an input unit 706, such as a keyboard, a mouse, etc.; an output unit 707, such as various types of displays, speakers, etc.; a storage unit 708, such as a magnetic disk, an optical disk, etc.; and a communication unit 709, such as a network card, a modem, a wireless communication transceiver, etc. The communication unit 709 allows the device 700 to exchange information/data with other devices through a computer network such as Internet and/or various telecommunication networks.

The computing unit 701 can be various general-purpose and/or special-purpose processing components with processing and computing capabilities. Some examples of the computing unit 701 include, but are not limited to: a central processing unit (CPU), a graphics processing unit (GPU), various dedicated artificial intelligence (AI) computing chips, various computing units that run machine learning model algorithms, a digital signal processor (DSP), and any suitable processor, controller, microcontroller, etc. The computing unit 701 executes the various methods and processes described above, such as the resource allocation method. For example, in some embodiments, the resource allocation method can be implemented as a computer software program tangibly embodied in a machine-readable medium such as the storage unit 708. In some embodiments, part or all of the computer program can be loaded and/or installed on the device 700 via the ROM 702 and/or the communication unit 709. When the computer program is loaded into the RAM 703 and executed by the computing unit 701, one or more steps of the resource allocation method described above can be performed. Alternatively, in other embodiments, the computing unit 701 can be configured to perform the resource allocation method by any other suitable means (for example, by means of firmware).

Various implementations of the systems and techniques described herein above can be implemented in digital electronic circuit system, integrated circuit system, field programmable gate array (FPGA), application specific integrated circuit (ASIC), application specific standard product (ASSP), system on chip (SOC), load programmable logic device (CPLD), computer hardware, firmware, software, and/or combinations thereof. These various implementations can include: being implemented in one or more computer programs that can be executed and/or interpreted on a programmable system that includes at least one programmable processor, the programmable processor can be a special-purpose or general-purpose programmable processor that can receive data and instructions from and transmit data and instructions to a storage system, at least one input device, and at least one output device.

The program code for implementing the method of the present disclosure can be compiled in any combination of one or more programming languages. These program codes can be provided to the processors or controllers of general-purpose computers, special-purpose computers or other programmable data processing devices, so that when executed by the processors or controllers, the program codes cause the functions/operations specified in the flowcharts and/or block diagrams to be implemented. The program code can be completely executed on the machine, partially executed on the machine, partially executed on the machine as a stand-alone software package and partially executed on a remote machine, or completely executed on a remote machine or server.

In the context of this disclosure, the machine-readable medium can be a tangible medium that can contain or store a program for use by or in connection with an instruction execution system, apparatus or device. The machine-readable medium can be a machine-readable signal medium or a machine-readable storage medium. The machine-readable media can include, but are not limited to, electronic, magnetic, optical, electromagnetic, infrared, or semiconductor systems, devices or devices, or any suitable combination of the aforesaid content. More specific examples of the machine-readable storage media will include electrical connections based on one or more wires, portable computer disks, hard disks, random access memory (RAM), read-only memory (ROM), erasable programmable read-only memory (EPROM or flash memory), optical fiber, portable compact disk read-only memory (CD-ROM), optical storage device, magnetic storage device, or any suitable combination of the aforesaid content.

In order to provide interaction with the user, the systems and techniques described herein can be implemented on a computer, the computer has: a display device (e.g., CRT (Cathode Ray Tube) or LCD (Liquid Crystal Display) monitor) for displaying information to the user; and a keyboard and a pointing device (e.g., a mouse or a trackball) through which the user can provide input to the computer. Other kinds of devices can also be used to provide interaction with the user; for example, the feedback provided to the user can be any form of sensory feedback (e.g., visual feedback, auditory feedback, or tactile feedback); and the input from the user can be received in any form (including acoustic input, voice input, or tactile input).

The systems and techniques described herein can be implemented in a computing system that includes back-end components (e.g., as a data server), or a computing system that includes middleware components (e.g., an application server), or a computing system that includes front-end components (e.g., a user computer with a graphical user interface or a web browser through which the user can interact with the implementations of the systems and technologies described herein), or a computing system that includes any combinations of such back-end components, middleware components, or front-end components. The components of the system can be connected to each other by digital data communication in any form or medium (e.g., communication network). Examples of the communication network include: local area network (LAN), wide area network (WAN) and Internet.

A computer system can include a client and a server. The client and the server are usually far away from each other and usually interact through the communication network. The relationship between the client and the server is generated by computer programs running on the corresponding computers and having a client-server relationship with each other. The server can be a cloud server, a distributed system server, or a server combined with blockchain.

It should be understood that the steps can be reordered, added or deleted using the various forms of processes shown above. For example, the steps described in the present disclosure can be executed in parallel, in sequence or in different orders, so long as the desired results of the technical solutions disclosed in the present disclosure can be achieved, there is no limitation herein.

The above specific implementations do not constitute limitation to the protection scope of the present disclosure. Those skilled in the art should understand that various modifications, combinations, sub-combinations and substitutions can be made according to design requirement and other factors. Any modification, equivalent substitution and improvement made within the spirit and principle of the present disclosure shall be included in the protection scope of the present disclosure.

**Claims**

1. A resource allocation method, comprising:

   determining a neural network model to be allocated resources, and determining a set of devices capable of providing resources for the neural network model;
   determining, based on the set of devices and the neural network model, a first set of evaluation points comprising a first number of evaluation points, each of which corresponds to one resource allocation scheme and a resource use cost corresponding to the resource allocation scheme;
   updating and iterating the first set of evaluation points to obtain a second set of evaluation points comprising a second number of evaluation points, each of which corresponds to one resource allocation scheme and the resource use cost corresponding to the resource allocation scheme, and the second number being greater than the first number; and
   selecting a resource allocation scheme with minimum resource use cost from the second set of evaluation points as a resource allocation scheme for allocating resources to the neural network model.

2. The method according to claim 1, wherein the updating and iterating the first set of evaluation points to obtain a second set of evaluation points comprises:

   updating a probabilistic surrogate model of an objective function applied to a Bayesian algorithm model based on the first set of evaluation points;
   generating randomly, based on the updated probabilistic surrogate model, a set of observation points comprising a third number of observation points, and each observation point corresponding to one resource allocation scheme;
   selecting an observation point with the smallest acquisition function value applied to the Bayesian algorithm model from the set of observation points;

determining the resource use cost of the neural network model in the resource allocation scheme corresponding to the observation point with the smallest acquisition function value;

adding the resource allocation scheme corresponding to the observation point with the smallest acquisition function value and the corresponding resource use cost, as updated evaluation points, into the first set of evaluation points; and

repeating the above processes until the second set of evaluation points is obtained.

3. The method according to claim 1 or 2, wherein the determining, based on the set of devices and the neural network models, the first set of evaluation points comprises:

generating randomly a first number of resource allocation schemes, each of the resource allocation schemes comprising allocated devices and network layers in the neural network model to be executed by the devices;

determining a resource use cost corresponding to each resource allocation scheme in the first number of resource allocation schemes; and

obtaining the first set of evaluation points based on the first number of resource allocation schemes and the corresponding resource use costs.

4. The method according to claim 2, wherein the objective function applied to the Bayesian algorithm model is a Gaussian process function.

5. The method according to claim 2, wherein the acquisition function applied to the Bayesian algorithm model is an exponential integral EI function.

6. The method according to any one of claims 1 to 5, wherein the resource use cost of the neural network model in the resource allocation scheme is determined as follows:

determining a correspondence between the resource allocation scheme and the resource use cost of the neural network model; and

determining the resource use cost of the neural network model in the resource allocation scheme based on the correspondence.

7. The method according to claim 6, wherein the determining a correspondence between the resource allocation scheme and the resource use cost of the neural network model comprises:

determining respectively a device usage quantity of the devices matching the resource allocation scheme for a variety of different types of devices in the set of devices, , and determining a first product value between the device usage quantity and the device use cost corresponding to the devices;

determining a sum of the first product values corresponding to respective devices among the variety of different types of devices, and determining a ratio between an amount of neural network training data and a data throughput corresponding to the neural network model; and

determining a second product value between the sum and the ratio, and obtaining a correspondence between the resource allocation scheme and the resource use cost of the neural network model based on the correspondence between the resource allocation scheme and the second product value.

8. The method according to claim 7, wherein the neural network model is divided into different stages, each of the different stages contains one or more network layers of the neural network model, and each stage is executed by the same type of devices; and

the data throughput corresponding to the neural network model satisfies the following constraints:

the data throughput of the neural network model is smaller than a minimum data throughput corresponding to respective stages among the stages; and

the data throughputs corresponding to respective stages among the stages are equal.

9. A resource allocation apparatus, comprising:

a determining module configured to determine a neural network model to be allocated resources, and determine a set of devices capable of providing resources for the neural network model; and determine, based on the set of devices and the neural network model, a first set of evaluation points comprising a first number of evaluation points, and each evaluation point corresponds to one resource allocation scheme and a resource use cost corresponding to the resource allocation scheme;

a processing module configured to update and iterate the first set of evaluation points to obtain a second set of evaluation points, comprising a second number of evaluation points, and each evaluation point corresponding to one resource allocation scheme and the resource use cost corresponding to the resource allocation scheme, and the second number being greater than the first number; and select a resource allocation scheme with a minimum resource use cost from the second set of evaluation points as the resource allocation scheme for allocating resources to the neural network model.

10. The apparatus according to claim 9, wherein the processing module is configured to update and iterate the first set of evaluation points to obtain a second set of evaluation points by:

updating a probabilistic surrogate model of an objective function applied to a Bayesian algorithm model based on the first set of evaluation points;

generating randomly y, based on the updated probabilistic surrogate model, a set of observation points comprising a third number of observation points, and each observation point corresponding to one resource allocation scheme;

selecting an observation point with the smallest acquisition function value applied to the Bayesian algorithm model from the set of observation points;

determining the resource use cost of the neural network model in the resource allocation scheme corresponding to the observation point with the smallest acquisition function value;

adding the resource allocation scheme corresponding to the observation point with the smallest acquisition function value and the corresponding resource use cost, as updated evaluation points, into the first set of evaluation points; and

repeating the above process until the second set of evaluation points is obtained.

11. The apparatus according to claim 9 or 10, wherein the determining module is configured to determine, based on the set of devices and the neural network models, the first set of evaluation points by:

generating randomly a first number of resource allocation schemes, each of the resource allocation schemes comprising allocated devices and network layers in the neural network model to be executed by the devices;

determining the resource use cost corresponding to each resource allocation scheme in the first number of resource allocation schemes; and

obtaining the first set of evaluation points based on the first number of resource allocation schemes and the corresponding resource use cost.

12. The apparatus according to any one of claims 9 to 11, wherein the determining module is configured to determine the resource use cost of the neural network model in the resource allocation scheme by:

determining a correspondence between the resource allocation scheme and the resource use cost of the neural network model; and

determining the resource use cost of the neural network model in the resource allocation scheme based on the correspondence.

13. The apparatus according to claim 12, wherein the determining module is configured to determine the correspondence between the resource allocation scheme and the resource use cost of the neural network model by:

determining, respectively, a device usage quantity of the devices matching the resource allocation schemes for a variety of different types of devices in the set of devices, , and determining a first product value between the device usage quantity and the device use cost corresponding to the devices;

determining a sum of the first product values corresponding to respective devices among the variety of different types of devices, and determining a ratio between an amount of neural network training data and a data throughput corresponding to the neural network model; and

determining a second product value between the sum and the ratio, and obtaining a correspondence between the resource allocation scheme and the resource use cost of the neural network model based on the correspondence between the resource allocation scheme and the second product value.

14. An electronic device, comprising:

at least one processor; and
a memory communicatively connected with the at least one processor;
wherein the memory stores instructions executable by the at least one processor, the instructions are executed by the at least one processor to enable the at least one processor to perform the method according to any one of claims 1-8.

15. A non-transitory computer readable storage medium storing computer instructions, wherein the computer instructions are used to cause the computer to execute the method according to any one of claims 1 to 8.

S101

determining a neural network model to be allocated resources, and determining a set of devices capable of providing resources for the neural network model

S102

determining, based on the set of devices and the neural network model, a first set of evaluation points

S103

updating and iterating the first set of evaluation points to obtain a second set of evaluation points

S104

selecting a resource allocation scheme with a minimum resource use cost from the second set evaluation points as the resource allocation scheme for allocating resources to the neural network model

**FIG. 1**

S201

updating a probabilistic surrogate model of an objective function applied to a Bayesian algorithm model based on the first set of evaluation points

S202

generating randomly, based on the updated probabilistic surrogate model, a set of observation points

S203

selecting an observation point with the smallest acquisition function value applied to the Bayesian algorithm model from the set of observation points

S204

determining the resource use cost of the neural network model in the resource allocation scheme corresponding to the observation point with the smallest acquisition function value

S205

adding the resource allocation scheme corresponding to the observation point with the smallest acquisition function value and the corresponding resource use cost, as updated evaluation points, into the first set of evaluation points

S206

repeating the above steps S201 to S205 until the second set of evaluation points is obtained

FIG. 2

S301

generating randomly a first number of resource allocation schemes

S302

determining a resource use cost corresponding to each resource allocation scheme in the first number of resource allocation schemes

S303

obtaining the first set of evaluation points based on the first number of resource allocation schemes and the corresponding resource use costs

**FIG. 3**

S401

determining a correspondence between the resource allocation scheme and the resource use cost of the neural network model

S402

determining the resource use cost of the neural network model in the resource allocation scheme based on the correspondence

**FIG. 4**

S501

determining respectively a device usage quantity of the devices matching the resource allocation scheme for a variety of different types of devices in the set of devices, , and determining a first product value between the device usage quantity and the device use cost corresponding to the devices

S502

determining a sum of the first product values corresponding to respective devices among the variety of different types of devices, and determining a ratio between an amount of neural network training data and a data throughput corresponding to the neural network model

S503

determining a second product value between the sum and the ratio, and obtaining a correspondence between the resource allocation scheme and the resource use cost of the neural network model based on the correspondence between the resource allocation scheme and the second product value

S504

determining the resource use cost of the neural network model in the resource allocation scheme based on the correspondence

**FIG. 5**

**FIG. 6**

**FIG. 7**

700

701
computing
unit

702
ROM

703
RAM

704

705
I/O interface

706
input unit

707
output unit

708
storage
unit

709
communication
unit

**FIG. 8**

Europäisches
Patentamt

European
Patent Office

Office européen
des brevets

# EUROPEAN SEARCH REPORT

**Application Number**

EP 22 19 1359

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/357256 A1 (CAO LIANJIE [US] ET AL) 18 November 2021 (2021-11-18) * abstract * * figure 4 * * paragraph [0012] – paragraph [0021] * * paragraph [0031] – paragraph [0050] * ----- | 1-15 | INV. G06F9/50 |
| X | US 2019/370643 A1 (AFLALO ESTELLE [IL] ET AL) 5 December 2019 (2019-12-05) * abstract * * figures 1, 2, 5A, 8, 9 * * paragraph [0015] – paragraph [0037] * * paragraph [0054] – paragraph [0059] * ----- | 1-15 | |

TECHNICAL FIELDS
SEARCHED      (IPC)

G06F

The present search report has been drawn up for all claims

| Place of search | Date of completion of the search | Examiner |
|---|---|---|
| The Hague | 25 May 2023 | Wirtz, Hanno |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.......................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 22 19 1359

This annex lists the patent family members relating to the patent documents cited in the above-mentioned European search report.
The members are as contained in the European Patent Office EDP file on
The European Patent Office is in no way liable for these particulars which are merely given for the purpose of information.

25-05-2023

| Patent document cited in search report | Publication date | Patent family member(s) | Publication date |
|---|---|---|---|
| US 2021357256 A1 | 18-11-2021 | NONE | |
| US 2019370643 A1 | 05-12-2019 | CN 112396173 A | 23-02-2021 |
| | | EP 3779802 A1 | 17-02-2021 |
| | | US 2019370643 A1 | 05-12-2019 |
| | | US 2023111365 A1 | 13-04-2023 |

EPO FORM P0459

For more details about this annex : see Official Journal of the European Patent Office, No. 12/82